Europäisches Patentamt

European Patent Office

Office européen des brevets

(19)

(11) Publication number: **0 330 171 B1**

(12) **EUROPEAN PATENT SPECIFICATION**

(45) Date of publication of patent specification: **07.04.93**

(51) Int. Cl.5: **A44B 19/02,** C08J 3/22, C08K 5/00, C08K 3/00

(21) Application number: **89103077.7**

(22) Date of filing: **22.02.89**

(54) Thermochromic slide fastener parts and method of making the same.

(30) Priority: **25.02.88 JP 42902/88**

(43) Date of publication of application:
**30.08.89 Bulletin 89/35**

(45) Publication of the grant of the patent:
**07.04.93 Bulletin 93/14**

(84) Designated Contracting States:
**DE ES FR GB IT**

(56) References cited:
**US-A- 3 816 335**

**CHEMICAL ABSTRACTS, vol. 95, no. 6, 10th August 1981, page 52, no. 44394x, Columbus, Ohio, US**

**CHEMICAL ABSTRACTS, vol. 75, no. 24, 13th December 1971, page 35, no. 141683k, Columbus, Ohio, US**

(73) Proprietor: **YOSHIDA KOGYO K.K.
No. 1 Kanda Izumi-cho Chiyoda-ku
Tokyo(JP)**

(72) Inventor: **Yokokura, Shigeru
146-12, Inuyama
Kurobe-shi Toyama-ken(JP)**

(74) Representative: **Casalonga, Axel et al
BUREAU D.A. CASALONGA - JOSSE Morassistrasse 8
W-8000 München 5 (DE)**

EP 0 330 171 B1

## Description

The present invention relates generally to slide fastener parts molded of synthetic resin, such as coupling elements, top and bottom end stops, sliders including slider bodies and pull tabs, and more particularly to thermochromic molded slide fastener parts which exhibit reversible change of color with change of temperature. It also relates to a method of making such thermochromic slide fastener parts.

Thermochromic materials capable of being formed into articles to which may be imparted the property of heat-recoverability have been described in USP 3816335.

Various slide fasteners are known which comprise a pair of stringer tapes each carrying on and along its longitudinal edge a row of coupling elements, top and bottom end stops attached to the stringer tapes adjacent to opposite ends of the rows of coupling elements, and a slider mounted on and movable along the rows of coupling elements to take them into and out of mutual interengagement for closing and opening the slide fastener.

The coupling elements, top and bottom end stops and sliders may be molded of synthetic resin colored by a pigment contained therein. The colored slide fastener parts are attractive per se, however, even with a combination of different colors, they do not offer any additional impact to the aesthetic sense of the user.

The present invention seeks to provide a colored slide fastener part which is highly fashionable and hence heightens the product value of a slide fastener having such fastener part and an article on which the slide fastener is used.

The present invention further seeks to provide a slide fastener part molded of a thermochromic synthetic resin and hence capable of exhibiting reversible change of color with change of temperature which gives a strong impact to the aesthetic sense of the user.

The present invention further seeks to provide a method of making such thermochromic molded slide fastener part.

According to a first aspect of the present invention, there is provided a thermochromic slide fastener part molded of a synthetic resin containing 0.3 to 4.5 weight percent of a thermochromic coloring matter.

According to a second aspect of the present invention, there is provided a method of making a thermochromic slide fastener part, comprising the steps of: melting and mixing 97 - 85 weight percent of a base synthetic resin and 3 - 15 weight percent of an additive synthetic resin containing 10 - 30 weight percent of a thermochromic coloring matter, at a temperature of not more than 290°C, thereby preparing a moldable synthetic resin; pelletizing the thus-prepared moldable synthetic resin; melting the thus-pelletized moldable synthetic resin at a temperature of not more than 290°C; and molding the melt moldable synthetic resin into the shape of a slide fastener part.

Many other advantages and features of the present invention will become manifest to those versed in the art upon making reference to the detailed description and the accompanying sheets of drawings in which a preferred structural embodiment incorporating the principles of the present invention is shown by way of illustrative example.

Figure 1 is a fragmentary plan view of a slide fastener including thermochromic coupling elements according to the present invention;

Figure 2 is a view similar to Figure 1, but showing the phenomenon of thermochromism presented by the coupling elements when the slide fastener is disposed at a certain temperature;

Figure 3 is a graphic representation of a distribution curve showing the transverse tensile strength (defined hereinbelow) of the thermochromic coupling elements taken with respect to the amount of a thermochromic coloring matter contained in a synthetic resin forming the coupling elements;

Figure 4 is a graphic representation of a distribution curve showing the vertical thrust strength (defined hereinbelow) of the thermochromic coupling elements taken with respect to the amount of the thermochromic coloring matter;

Figure 5 is a graphic representation of a distribution curve showing the opening frictional resistance (defined hereinbelow) of the thermochromic coupling elements taken with respect to the amount of the thermochromic coloring matter;

Figure 6 is a graphic representation of a distribution curve showing the closing frictional resistance (defined hereinbelow) of the thermochromic coupling elements taken with respect to the amount of the thermochromic coloring matter;

Figure 7 is a graphic representation of a distribution curve showing the longitudinal anchoring strength (defined hereinbelow) of the thermochromic coupling elements taken with respect to the amount of the thermochromic coloring matter;

Figure 8 is a graphic representation of a distribution curve showing the transverse anchoring strength (defined hereinbelow) of the thermochromic coupling elements taken with respect to the amount of the thermochromic coloring matter; and

Figure 9 is a flowchart illustrative of a method of making the thermochromic coupling elements.

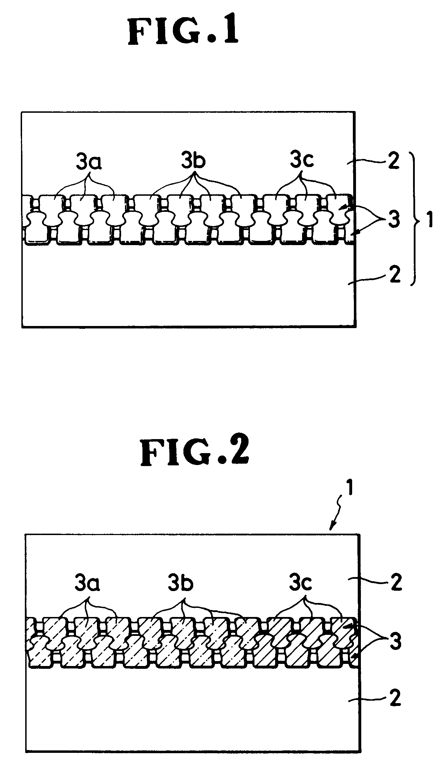

Figure 1 shows, in fragmetary plan, a slide fastener 1 including a pair of stringer tapes 2, 2 and a pair of interengaged rows of coupling elements 3 injection-molded on and along the respective inner longitudinal edges of the stringer tapes 2, 2.

The rows of coupling elements 3 includes a plurality (three in the illustrated embodiment) of element groups 3a, 3b, 3c each of which is molded of a thermochromic synthetic resin. The thermochromic synthetic resin contains 0.3 - 4.5 weight percent, preferably 0.5 - 3.0 weight percent, of a thermochromic coloring matter such as a thermochromic pigment which exhibits reversible change of color with change of temperature. Specific examples of the synthetic resin include polyacetal resin, polyamide resin, polyester resin, polypropylene resin, polycarbonate resin, polyethylene resin, polystyrene resin, acrylic resin and the combination thereof.

In determining the amount of the thermochromic coloring matter, a consideration must be given to the physical properties of the molded fastener parts (the coupling elements 3 in the illustrated embodiment) so that the coupling elements 3 molded of thermochromic synthetic resin will fulfil the necessary physical requirements, such as (a) the coupling strength against separation when subjected to lateral pulling forces (hereinafter referred to as "transverse tensile strength", for brevity), (b) the coupling strength against separation when subjected to vertical thrust (hereinafter referred to as "vertical thrust strength", for brevity), (c) the frictional resistance against motion of a slider (not shown) when the slider starts moving in the fastener opening direction (hereinafter referred to as "opening frictional resistance", for brevity), (d) the frictional resistance against motion of the slider when the slider starts moving in the fastener closing direction (hereinafter referred to as "closing frictional resistance", for brevity), (e) the anchoring strength against detachment from the stringer tape 1 when subjected to pulling forces tending to displace the coupling element 3 in a londitudinal direction of the slide fastener (hereinafter referred to as "longitudinal anchoring strength), and (f) the anchoring strength against detachment from the stringer tape 1 when subjected to pulling forces tending to displace the coupling element 3 in a transverse direction of the slide fastener.

An exhaustive study made by the present inventor has proven the fact that satisfactory results can be obtained when the amount of the thermochromic coloring matter to be added is in the range of 0.3 - 4.5 by weight percent as calculated in terms of the net content, based on 100 weight percent of the synthetic resin forming the slide fastener part, i.e. coupling elements 3 in the illustrated embodiment.

Smaller amounts than 0.3 weight percent would fail to produce a distinct color change. Larger amounts than 4.5 weight percent would lower each of the transverse tensile strength, the vertical thrust strength, the longitudinal anchoring strength and the transverse anchoring strength, and also increase both of the opening frictional resistance and the closing frictional resistance, as described later on. Yet, the thermochromic coloring matter is very expensive per se and hence the larger the amount of the thermochromic coloring matter, the higher the production cost of the slide fastener part and the slide fastener having such fastener part.

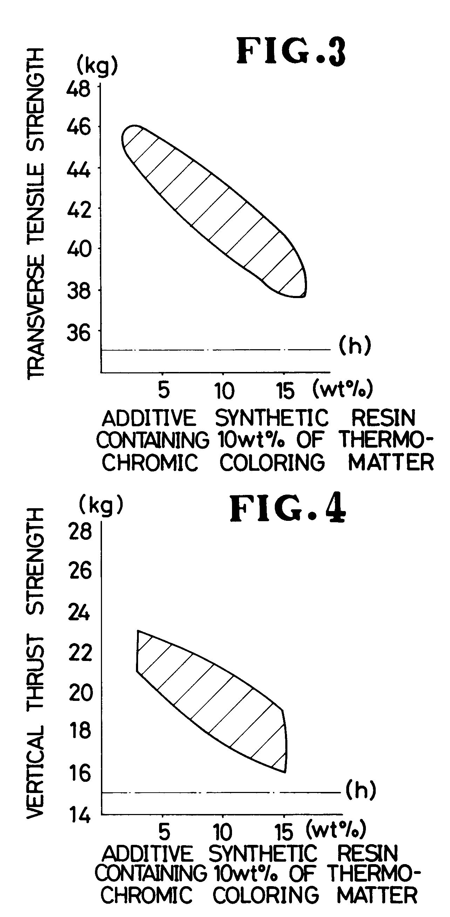

The correlation between the amount of the thermochromic coloring matter and the physical properties of the coupling elements formed of thermochromic synthetic resin containing the thermochromic coloring matter will be described below with reference to Figures 3 through 8. Throughout these figures, the axis of abscissa of a graph indicates the amount of an additive synthetic resin containing 10 weight percent of the thermochromic coloring matter, which additive synthetic resin is mixed up with a base synthetic resin at a predetermined mixing ratio for the formation of a moldable synthetic resin in a manner as described later on. In the graph, an acceptable limit on the physical property of the coupling elements is indicated by phantom lines denoted by the reference character (h).

Figure 3 is a graphic representation of a distribution curve taken with respect to the transverse tensile strength of the thermochromic coupling elements, measured as stipulated in JIS S 3015. Likewise, Figure 3 is a graphic respresentation of a distribution curve taken on the vertical thrust strength of the test coupling elements. As appears clear from these figures, both strengths is lowered as the amount of the thermochromic coloring matter is increased.

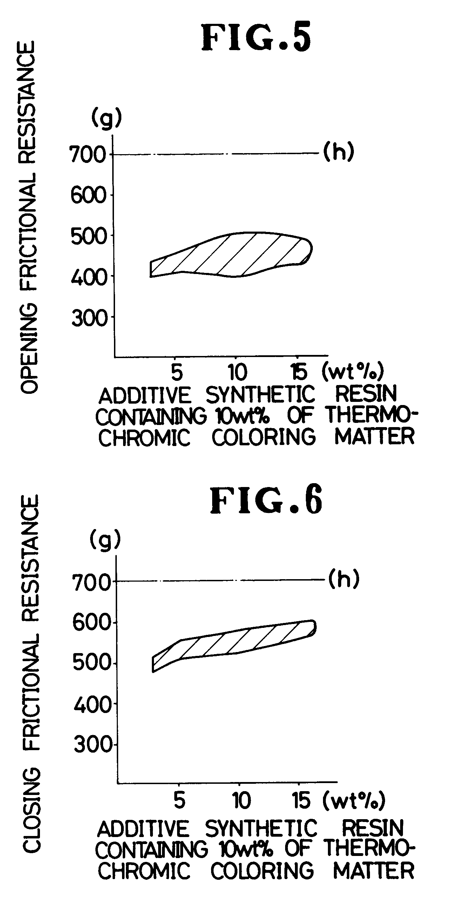

Figures 5 and 6 are graphic representations of distribution curves taken respectively on the opening frictional resistance and the closing frictional resistance that are measured as stipulated in JIS S 3015. As evidenced by these figures, both frictional resistances increase as the amount of the thermochromic coloring matter is increased.

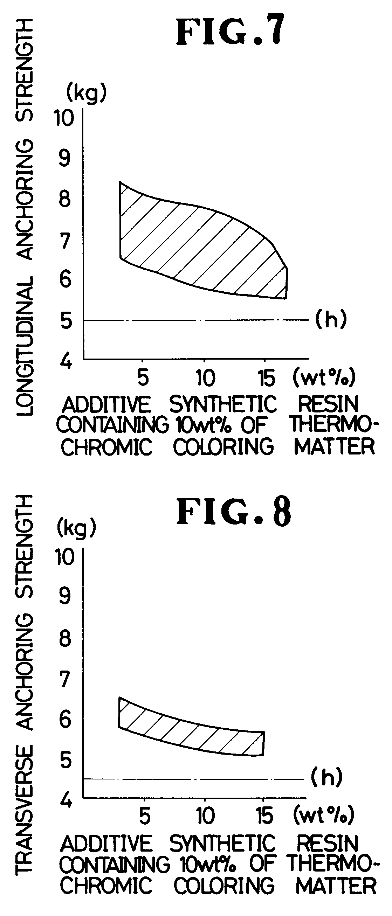

Figures 7 and 8 are graphic representations of distribution curves taken respectively on the longitudinal anchoring strength of the coupling elements and the transverse anchoring strength of the coupling elements. These figures clearly demonstrate that both anchoring strengths become small as the amount of the thermochromic coloring matter is increased.

All the thermochromic coupling element groups 3a, 3b, 3c of the slide fastener 1 shown in Figure 1 assume milk-white color at a temperature of 23°C. When the slide fastener 1 is cooled at a temperature of 12°C, the respective coupling element groups 3a, 3b, 3c change color to yellow, pink and blue, as shown in Figure 2. On being heated at a temperature of 23°C, the coupling element groups 3a, 3b, 3c change color to milk-white. Thus, the thermochromic coupling elements 3 exhibit reversible change of color with change of temperature. Such reversible color change is available either between a nearly colorless state and a colored state, or between a colored state and another colored state. Furthermore, by properly selecting the type of the thermochromic coloring matter, it is possible to produce a slide fastener part which is capable of changing color to any one of yellow, orange, pink, light-brown, blue and black at a temperature in the range of from -30°C to +44°C. The thermochromic slide fastener part has a sensitivity to a change of temperature within 2°C.

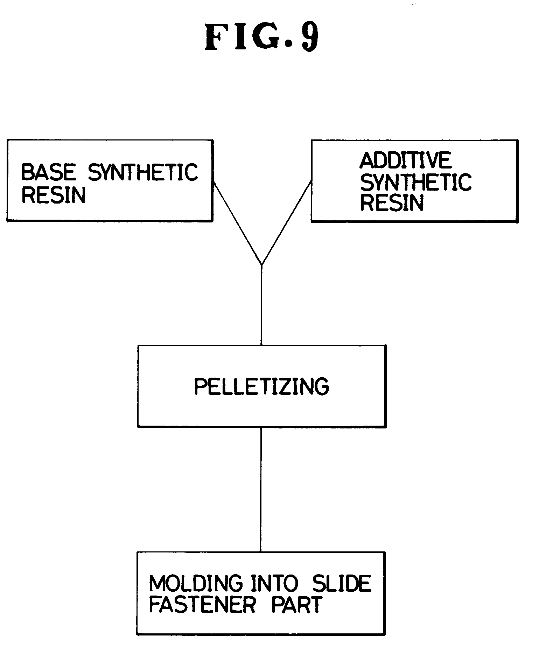

A method of making the thermochromic molded coupling elements 3 will be described with reference to Figure 9.

A base synthetic resin constituting a primary component of the molded coupling element and an additive synthetic resin constituting a secondary component of the molded coupling element and containing 10 - 30 weight percent of a thermochromic coloring matter are prepared separately. Specific examples of the base synthetic resin include polyacetal resin, polyamide resin, polyester resin, polypropylene resin, polycarbonate resin, acrylic resin and the combination thereof. Similarly, specific examples of the additive synthetic resin include polyacetal resin, polyamide resin, polyester resin, polypropylene resin, polycarbonate resin, polyethylene resin, polystyrene resin, acrylic resin and the combination thereof. The additive synthetic resin contains 10 - 30 weight percent, preferably 10 - 20 weight percent of the thermochromic coloring matter.

Then, 97 - 85 weight percent of the base synthetic resin and 3 - 15 weight percent of the additive synthetic resin are melted and homogeneously mixed at a temperature of not more than 290°C, thereby preparing a moldable synthetic resin. The moldable synthetic resin is thereafter pelletized in the manner known per se. With this pelletization from a molten mixture of the controlled amount of the base synthetic resin and the controlled amount of the additive synthetic resin containing the controlled amount of the coloring matter, each individual synthetic resin pellet contains 0.3 - 4.5 weight percent of the coloring matter, as determined according to the following equation.

10/100 x 3/100 x 100 = 0.3 (mimimum)
30/100 x 15/100 x 100 = 4.5 (maximum)

The processing temperature should be not higher than 290°C. Higher processing temperatures than 290°C would damage the molecular structure of the coloring matter and eventually make the coloring matter ineffective.

The thus produced synthetic resin pellets are melted at a temperature not exceeding 290°C and finally the melt synthetic resin is molded by injection-molding into a row of mold cavities (not shown) each having a shape complementary in contour to the shape of a coupling element (identical to the coupling element 3 shown in Figure 1). In this instance, one longitudinal edge of a stringer tape (identical to the stringer tape 1 shown in Figure 1) is disposed partly in the mold cavities. Consequently, upon removal from the mold cavities, a row of coupling elements 3 is formed on the longitudinal edge of the stringer tape 1.

As described above, according to the invention, the formable synthetic resin which is prepared by mixing a base synthetic resin and an additive synthetic resin containing a thermochromic coloring matter at a predetermined mixing ratio is pelletized before it is molded into the shape of coupling elements. With this two-stage molding process, the individual molded coupling elements are uniform both in color and strength. It has experimentally proved that the coupling elements having uniform color and strength have not been obtained by a single-stage molding process in which a moldable resin prepared by mixing the base synthetic resin and the additive synthetic resin containing the thermochromic coloring matter is molded directly into the shape of coupling elements.

For purposes of illustration, the present invention has been described with reference to a slide fastener part in the form of the injection-molded coupling elements. The present invention is not limited to the illustrated embodiment, but it is also applicable to other slide fastener parts, such as top and bottom end stops and sliders that are formed of injection-molded synthetic resin, and those coupling elements which are formed by extrusion-molding from a monofilamentary material into a coiled or zigzag shape.

## Claims

1. A thermochromic slide fastener part molded of a synthetic resin containing 0.3 to 4.5 weight percent of a thermochromic coloring matter.

2. A thermochromic slide fastener part according to claim 1, wherein the amount of said thermochromic coloring matter is in the range between 0.5 and 3.0 weight percent.

3. A thermochromic slide fastener part according to claim 1, wherein said thermochromic coloring matter comprises a thermochromic pigment.

4. A thermochromic slide fastener part according to claim 1, wherein said thermochromic coloring matter is sensitive to a change of temperature smaller than 2°C.

5. A thermochromic slide fastener part according to claim 1, wherein said thermochromic coloring matter is active within a temperature range between -30° and +44°C.

6. A method of making a thermochromic slide fastener part, comprising the steps of: melting and mixing 97 - 85 weight percent of a base synthetic resin and 3 - 15 weight percent of an additive synthetic resin containing 10 - 30 weight percent of a thermochromic coloring matter, at a temperature of not more than 290°C, thereby preparing a moldable synthetic resin; pelletizing the thus-prepared moldable synthetic resin; melting the thus-pelletized moldable synthetic resin at a temperature of not more than 290°C; and molding the molten moldable synthetic resin into the shape of a slide fastener part.

7. A method according to claim 6, wherein the amount of said additive synthetic resin is in the range between 10 and 20 weight percent.

8. A method according to claim 6, wherein said thermochromic coloring matter is sensitive to a change of temperature smaller than 2°C.

9. A method according to claim 6, wherein said thermochromic coloring matter is active within a temperature range between -30° and +44°C.

10. A method according to claim 6, wherein said base synthetic resin is one selected from the group consisting of polyacetal, polyamide, polyester, polypropylene, polycarbonate, acrylics and the combination thereof, said additive synthetic resin is one selected from the group consisting of polyacetal, polyamide, polyester, polypropylene, polycarbonate, polyethylene, polystyrene, acrylics and the combination thereof.

**Patentansprüche**

1. Thermochromisches Reißverschlußteil, das aus einem Kunststoff gegossen ist, der 0,3 - 4,5 Gew% eines thermochromischen Farbstoffs enthält.

2. Thermochromisches Reißverschlußteil nach Anspruch 1, wobei die Menge des thermochromischen Farbstoffs im Bereich von 0,5 - 3,0 Gew% liegt.

3. Thermochromisches Reißverschlußteil nach Anspruch 1, wobei der thermochromische Farbstoff ein thermochromisches Pigment enthält.

4. Thermochromisches Reißverschlußteil nach Anspruch 1, wobei der thermochromische Farbstoff auf Temperaturänderungen von weniger als 2°C anspricht.

5. Thermochromisches Reißverschlußteil nach Anspruch 1, wobei der thermochromische Farbstoff in einem Temperaturbereich von -30° bis +44°C wirksam ist.

6. Verfahren zur Herstellung eines thermochromischen Reißverschlußteils, umfassend die Schritte: Schmelzen und Mischen von 97 - 85 Gew.% eines Basiskunststoffs und 3- 15 Gew.% eines zugefügten Kunststoffs, der 10 - 30 Gew.% eines thermochromischen Farbstoffs enthält, bei einer Temperatur von nicht mehr als 290°C, wodurch ein gießfähiger Kunststoff erhalten wird; Pelletisieren des auf diese Weise erhaltenen gießfähigen Kunststoffs; Schmelzen des auf diese Weise pelletisierten gießfähigen Kunststoffs bei einer Temperatur von nicht mehr als 290°C; und Gießen des geschmolzenen Kunststoffs in die Form eines Reißverschlußteils.

7. Verfahren nach Anspruch 6, wobei die Menge des zugefügten Kunststoffs im Bereich von 10 - 20 Gew.% liegt.

8. Verfahren nach Anspruch 6, wobei der thermochromische Farbstoff auf Temperaturänderungen von weniger als 2°C anspricht.

9. Verfahren nach Anspruch 6, wobei der thermochromische Farbstoff in einem Temperaturbereich von -30° bis +44°C wirksam ist.

10. Verfahren nach Anspruch 6, wobei der Basiskunststoff aus Polyazetal-, Polyamid-, Polyester-, Polypropylen-, Polykarbonat- und Acryl-Kunststoff und einer Kombination derselben besteht, und wobei der zugefügte Kunststoff aus Polyazetal-, Polyamid-, Polyester-, Polypropylen-, Polykarbonat-, Polyethylen-, Polystyren- und Acryl-Kunststoff und einer Kombination derselben besteht.

## Revendications

1. Pièce de fermeture à glissière thermochromique en résine synthétique moulée contenant 0,3 à 4,5 % en poids d'une substance colorante thermochromique.

2. Pièce de fermeture à glissière thermochromique selon la revendication 1, dans laquelle la quantité de ladite substance colorante thermochromique est comprise entre 0,5 et 3,0 % en poids.

3. Pièce de fermeture à glissière thermochromique selon la revendication 1, dans laquelle ladite substance colorante thermochromique comprend un pigment thermochromique .

4. Pièce de fermeture à glissière thermochromique selon la revendication 1, dans laquelle ladite substance colorante thermochromique est sensible à une variation de température plus petite que 2°C.

5. Pièce de fermeture à glissière thermochromique selon la revendication 1, dans laquelle la substance colorante thermochromique est active dans une plage de températures comprise entre -30° et +44°C.

6. Procédé pour fabriquer une pièce de fermeture à glissière thermochromique, comprenant les étapes consistant : à fondre et mélanger 97-85 % en poids d'une résine synthétique de base et 3-15 % en poids d'une résine synthétique d'addition contenant 10-30 % en poids d'une substance colorante thermochromique à une température qui n'est pas supérieure à 290°C, de manière à préparer ainsi une résine synthétique moulable ; à réduire en granulés la résine synthétique moulable ainsi préparée ; à faire fondre à une température ne dépassant pas 290°C la résine synthétique moulable ainsi réduite en granulés ; et à mouler la résine synthétique moulable fondue de manière à lui donner la forme d'une pièce de fermeture à glissière.

7. Procédé selon la revendication 6, dans lequel la quantité de résine synthétique d'addition est comprise entre 10 et 20 % en poids.

8. Procédé selon la revendication 6, dans lequel la substance colorante thermochromique est sensible à une variation de température inférieure à 2°C.

9. Procédé selon la revendication 6, dans lequel la substance colorante thermochromique est active dans une plage de température comprise entre -30° et + 44°C.

10. Procédé selon la revendication 6, dans lequel la résine synthétique de base est une résine choisie dans le groupe comprenant le polyacétal, le polyamide, le polyester, le polypropylène, le polycarbonate, les résines acryliques et leurs combinaisons, ladite résine synthétique d'addition étant une résine choisie parmi le groupe comprenant le polyacétal, le polyamide, le polyester, le polypropylène, le polycarbonate, le polyéthylène, le polystyrène, les résines acryliques et leurs combinaisons.

# FIG.1

# FIG.2

# FIG.3

TRANSVERSE TENSILE STRENGTH (kg)

ADDITIVE SYNTHETIC RESIN
CONTAINING 10wt% OF THERMO-
CHROMIC COLORING MATTER

# FIG.4

VERTICAL THRUST STRENGTH (kg)

ADDITIVE SYNTHETIC RESIN
CONTAINING 10wt% OF THERMO-
CHROMIC COLORING MATTER

# FIG.5

OPENING FRICTIONAL RESISTANCE

(g)

700 ———————————————— (h)
600
500
400
300

5    10    15  (wt%)

ADDITIVE SYNTHETIC RESIN
CONTAINING 10wt% OF THERMO-
CHROMIC COLORING MATTER

# FIG.6

CLOSING FRICTIONAL RESISTANCE

(g)

700 ———————————————— (h)
600
500
400
300

5    10    15  (wt%)

ADDITIVE SYNTHETIC RESIN
CONTAINING 10wt% OF THERMO-
CHROMIC COLORING MATTER

# FIG.7

LONGITUDINAL ANCHORING STRENGTH

(kg)

(h)

5 10 15 (wt%)

ADDITIVE SYNTHETIC RESIN CONTAINING 10wt% OF THERMO-CHROMIC COLORING MATTER

# FIG.8

TRANSVERSE ANCHORING STRENGTH

(kg)

(h)

5 10 15 (wt%)

ADDITIVE SYNTHETIC RESIN CONTAINING 10wt% OF THERMO-CHROMIC COLORING MATTER

# FIG. 9

```
┌─────────────────────┐        ┌─────────────────────┐
│ BASE SYNTHETIC      │        │ ADDITIVE            │
│ RESIN               │        │ SYNTHETIC           │
│                     │        │ RESIN               │
└─────────────────────┘        └─────────────────────┘

          ┌─────────────────────────┐
          │     PELLETIZING         │
          └─────────────────────────┘

          ┌─────────────────────────┐
          │ MOLDING INTO SLIDE      │
          │ FASTENER  PART          │
          └─────────────────────────┘
```